# EUROPEAN PATENT APPLICATION

(11) **EP 1 933 013 A1**
(43) Date of publication of application: **18.06.2008**
(21) Application number: 06797826.2
(22) Date of filing: 12.09.2006
(51) Int. Cl.: F01N 3/24, B01D 53/86, B01D 53/94, F01N 3/08, F01N 3/28, F01N 3/36

(54) **EXHAUST GAS PURIFIER**

(30) Priority: 13.09.2005 JP 2005265289
(71) Applicant: Hino Motors, Ltd., Hino-shi, Tokyo 191-8660 (JP)
(72) Inventor: HOSOYA, Mitsuru, Hino-shi, Tokyo 1918660 (JP); SHIMODA, Masatoshi, Hino-shi, Tokyo 1918660 (JP); ISHII, Mori, Hino-shi, Tokyo 1918660 (JP)
(74) Representative: Köhler, Walter
(86) International application number: PCT/JP2006/318019
(87) International publication number: WO 2007/032327

(57) **Abstract**

Fuel added to exhaust gas is uniformly afforded to catalytic surfaces of a NOₓ-adsorption reduction catalyst so that overall regeneration of the NOₓ-adsorption reduction catalyst proceeds efficiently.

The invention is directed to an exhaust emission control device with the NOₓ-adsorption reduction catalyst 12 incorporated in an exhaust pipe (exhaust flow passage) 11 for guidance of the exhaust gas 9 from an engine 1 and with an fuel addition device (fuel addition means) 13 arranged for addition of fuel as a reducing agent to the exhaust pipe (exhaust flow passage) 11 upstream of the reduction catalyst 12 (exhaust flow passage) 11, a dispersion plate 15 being arranged between a position of adding the fuel by the fuel addition device 13 and the NOₓ-adsorption reduction catalyst 12 for dispersing the exhaust gas 9 to stimulate dispersion of the added fuel.

## Description

### Technical Field

The present invention relates to an exhaust emission control device.

### Background Art

Conventionally, exhaust emission control has been attempted using an exhaust emission control catalyst incorporated in an exhaust pipe. Known as such exhaust emission control catalyst is a NOₓ-adsorption reduction catalyst having a feature of oxidizing NOₓ in exhaust gas for temporary adsorption in the form of nitrate salt when air/fuel ratio of exhaust is lean, and decomposing and discharging NOₓ through intervention of unburned HC, CO and the like for reduction and purification when O₂ concentration in the exhaust gas is lowered.

Since no further NOₓ can be adsorbed once an adsorbed NOₓ amount increases into saturation in the NOₓ-adsorption reduction catalyst, it is periodically required to lower the O₂ concentration in the exhaust gas flowing into the reduction catalyst to decompose and discharge NOₓ.

For example, in application to a gasoline engine, lowering the operational air/fuel ratio in the engine (operating the engine with rich air/fuel ratio) can lower the O₂ concentration and increase the reduction components such as unburned HC and CO in the exhaust gas for facilitation of decomposition and discharge of NOₓ. However, in use of a NOₓ-adsorption reduction catalyst in an exhaust emission control device for a diesel engine, it is difficult to operate the engine with rich air/fuel ratio.

Thus, it has been necessary that, while an operation with low λ (λ : air excessive ratio) through fuel injection control is conducted as much as possible at engine side, fuel (HC) is added to the exhaust gas upstream of a NOₓ-adsorption reduction catalyst, the added fuel being reacted as reducing agent with O₂ on the reduction catalyst so as to lower the O₂ concentration in the exhaust gas (see, for example, Reference 1).
[Reference 1] JP 2001-73748A

### Summary of the Invention

### Problems to be Solved by the Invention

However, in such fuel (HC) addition upstream of the NOₓ-adsorption reduction catalyst, mist in the fuel added to the exhaust gas is led to the reduction catalyst without dispersed satisfactorily and tends to nonuniformly hit on catalytic surfaces, so that there may occur a situation that the regenerative reaction locally proceeds only around catalytic surfaces on which the mist of the fuel has been attached, and overall regeneration of the catalyst does not effectively proceed, disadvantageously resulting in lowering of recovery ratio of NOₓ-adsorption sites occupied in volume of the reduction catalyst and failing in educing maximal NOₓ reduction performance in the NOₓ-adsorption reduction catalyst

The invention was made in view of the above and has its object to uniformly afford fuel added in exhaust gas to catalytic surfaces of a NOₓ-adsorption reduction catalyst so that overall regeneration of the reduction catalyst may proceed efficiently.

### Means or Measures for Solving the Problems

The invention is characterized in that a NOₓ-adsorption reduction catalyst is incorporated in an exhaust flow passage for guiding exhaust gas from an engine, fuel addition means for addition of fuel as reducing agent being provided in the exhaust flow passage upstream of the reduction catalyst, a dispersion plate being provided between a position of adding fuel by the fuel addition means and the reduction catalyst so as to disperse the exhaust gas to stimulate dispersion of the added fuel.

The dispersion plate may be composed of, for example, at least either of punching metal and metal mesh.

Thus, the exhaust gas added with fuel by the fuel addition means passes through the dispersion plate to be dispersed, which stimulates the dispersion of the added fuel to equalize mist dispersion in the exhaust flow passage. As a result, uniform fuel supply to the catalytic surfaces of the NOₓ-adsorption reduction catalyst is realized so that overall regeneration of the reduction catalyst proceeds efficiently.

Dispersion of the mist in the fuel added to the exhaust gas through its passing through the dispersion plate stimulates refinement or hyperfination of the mist in the fuel. This action of stimulating the hyperfination of the mist also enhances reactivity on the catalytic surfaces of the NOₓ-adsorption reduction catalyst in comparison with before to attain improvement of regeneration efficiency.

Preferably, in the invention, a catalytic regenerative particulate filter is arranged just behind the NOₓ-adsorption reduction catalyst, which makes it possible to capture the particulates entrained in the exhaust gas having passed through the reduction catalyst to attain concurrent reduction in amount of NOₓ and the particulates.

The unifomization in reaction of the added fuel in the front-end NOₓ-adsorption reduction catalyst brings about elevation in temperature of the overall back-end particulate filter with no localization through resultant reaction heat, so that the particulates captured are satisfactorily burned off to attain early regeneration of the particulate filter.

Excessive fuel for use to regeneration of the front-end NOₓ-adsorption reduction catalyst is oxidized in the back-end particulate filter, so that HC finally remaining in the exhaust gas and discharged out of a vehicle is substantially reduced.

### Effects of the Invention

According to the above exhaust emission control device of the invention, the following excellent features and advantages can be obtained.

(I) The fuel added to the exhaust gas can be satisfactorily dispersed, which can bring about the equalization in mist dispersion in the added fuel and the refinement or hyperfination of the mist, so that highly reactive hyperfine fuel mist is uniformly afforded to the catalytic surfaces of the NOₓ-adsorption reduction catalyst. As a result, effective regeneration of the NOₓ-adsorption reduction catalyst can be realized to educe the maximal NOₓ reduction performance of the NOₓ-adsorption reduction catalyst.

(II) When a catalytic regenerative particulate filter is arranged just behind the NOₓ-adsorption reduction catalyst, the particulates entrained in the exhaust gas having passed through the NOₓ-adsorption reduction catalyst can be captured to realize concurrent reduction in amount of NOₓ and the particulates. The particulates captured can be efficiently burned off using the heat from equalized reaction in the front-end NOₓ-adsorption reduction catalyst, and excessive combustible components for use to the regeneration of the front-end NOₓ-adsorption reduction catalyst can be oxidized to substantially reduce HC remaining finally in the exhaust gas and discharged to outside of a vehicle.

### Brief Description of the Drawings

Fig. 1 is a schematic view showing an embodiment of the invention;
Fig. 2 is a graph showing differences between the NOₓ reduction ratio whether the dispersion plate exists or not in Fig. 1; and
Fig. 3 is a graph showing differences in regenerative treatment time whether the dispersion plate exists in Fig. 1 or not.

### Explanation of the Reference Numerals

- 1: engine
- 9: exhaust gas
- 11: exhaust pipe (exhaust flow passage)
- 12: NOₓ-adsorption reduction catalyst
- 13: fuel addition device (fuel addition means)
- 14: casing (exhaust flow passage)
- 15: dispersion plate
- 16: particulate filter

### Best Mode for Carrying Out the Invention

An embodiment of the invention will be described in conjunction with the drawings.

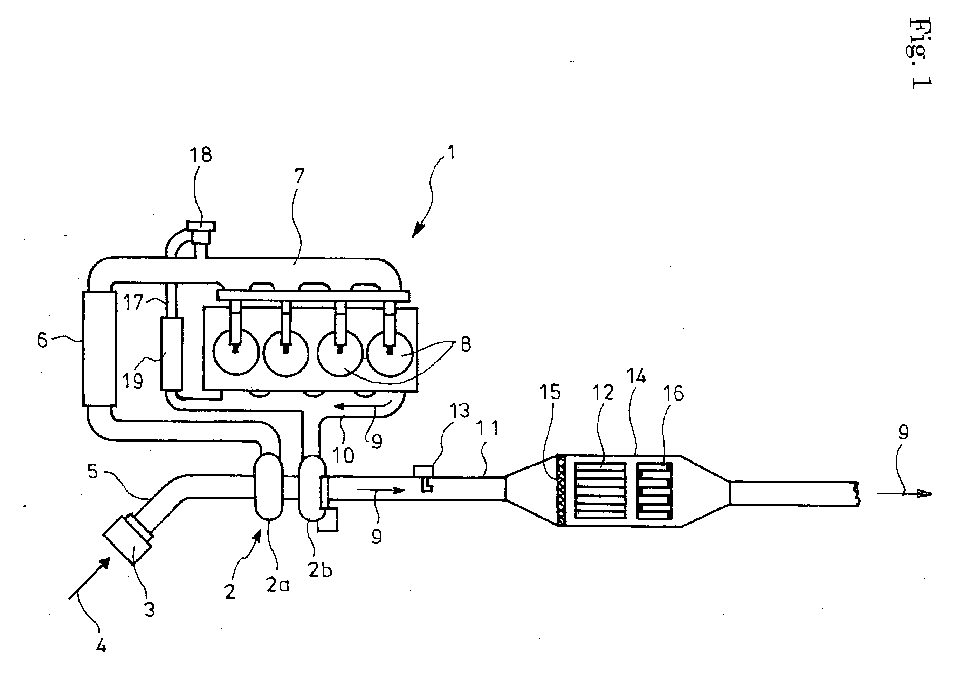

Fig. 1 shows an embodiment of the invention. In Fig. 1, reference numeral 1 denotes a diesel engine, the engine 1 comprising a turbocharger 2 with a compressor 2a and a turbine 2b. Intake air 4 from an air cleaner 3 is fed via an intake pipe 5 to the compressor 2a of the turbocharger 2, the intake air 4 pressurized being fed to and cooled by an intercooler 6, the cooled intake air 4 from the intercooler 6 being further fed to an intake manifold 7 and dispersed into respective cylinders 8 in the engine 1.

Exhaust gas 9 discharged from the respective cylinders 8 of the engine 1 is fed via an exhaust manifold 10 to the turbine 2b of the turbocharger 2, the exhaust gas having driven the turbine 2b being guided to the exhaust pipe (exhaust flow passage) 11 and passing through a NOₓ-adsorption reduction catalyst 12 incorporated in the exhaust pipe 11, the gas with reduced NOₓ there being discharged outside of a vehicle.

Arranged in the exhaust pipe 11 and at an entry side of the NOₓ-adsorption reduction catalyst 12 is a fuel addition device 13 as fuel addition means for injection of the fuel into the exhaust pipe 11, the fuel added by the fuel addition device 13 being utilized as reducing agent for regeneration of the NOₓ-adsorption reduction catalyst 12.

Arranged in the exhaust pipe 11 and in an entry portion of a casing (exhaust flow passage) 14 carrying the NOₓ-adsorption reduction catalyst 12 is a dispersion plate 15 which disperses the exhaust gas 9 to stimulate dispersion of the added fuel, the dispersion plate 15 being a ventilation structure composed of, for example, punching metal and/or metal mesh.

In the embodiment shown, arranged in the casing 14 and just behind the NOₓ-adsorption reduction catalyst 12 is a catalytic regenerative particulate filter 16 carrying an oxidation catalyst so as to capture the particles entrained in the exhaust gas having passed through the front-end reduction catalyst 12.

In the figure, reference numeral 17 denotes an EGR pipe; 18, an EGR valve; and 19, an EGR cooler.

Thus, with the exhaust emission control device as constructed in the above, the exhaust gas 9 added with the fuel by the fuel addition device 13 passes through the dispersion plate 15 to be dispersed to thereby stimulate dispersion of the added fuel into uniformization of the mist distribution in the casing (exhaust flow passage) 14. As a result, uniform fuel supply to the catalytic surfaces of the NOₓ-adsorption reduction catalyst 12 is realized so that the overall regeneration of the NOₓ-adsorption reduction catalyst 12 proceeds efficiently. Dispersion of the mist of the fuel through its passing through the dispersion plate 15 stimulates refinement or hyperfination of the mist in the fuel, so that, through such action of stimulating the hyperfination of the mist, the reactivity on the catalytic surfaces of the NOₓ-adsorption reduction catalyst 12 is enhanced in comparison with before to improve the regeneration efficiency.

Especially in the embodiment, the catalytic regenerative particulate filter 16 is arranged just behind the NOₓ-adsorption reduction catalyst 12, so that the particles entrained in the exhaust gas 9 having passed through the front-end NOₓ-adsorption reduction catalyst 12 can be captured by the back-end particulate filter 16 to attain concurrent reduction in amount of NOₓ and the particulates.

Moreover, the uniformization in reaction of the added fuel in the front-end NOₓ-adsorption reduction catalyst 12 brings about elevation in temperature of the overall back-end particulate filter 16 without localization through the resultant reaction heat, so that the particulates captured are satisfactorily burned off to attain early regeneration of the particulate filter 16.

Thus, according to the embodiment, the fuel added to the exhaust gas 9 can be satisfactorily dispersed to attain unifomization of mist dispersion in the added fuel and hyperfination of the mist, so that the highly reactive hyperfine fuel mist can be uniformly afforded to the catalytic surfaces of the NOₓ-adsorption reduction catalyst 12 to realize the effective regeneration of the reduction catalyst 12 and educe maximal NOₓ reduction performance of the reduction catalyst 12.

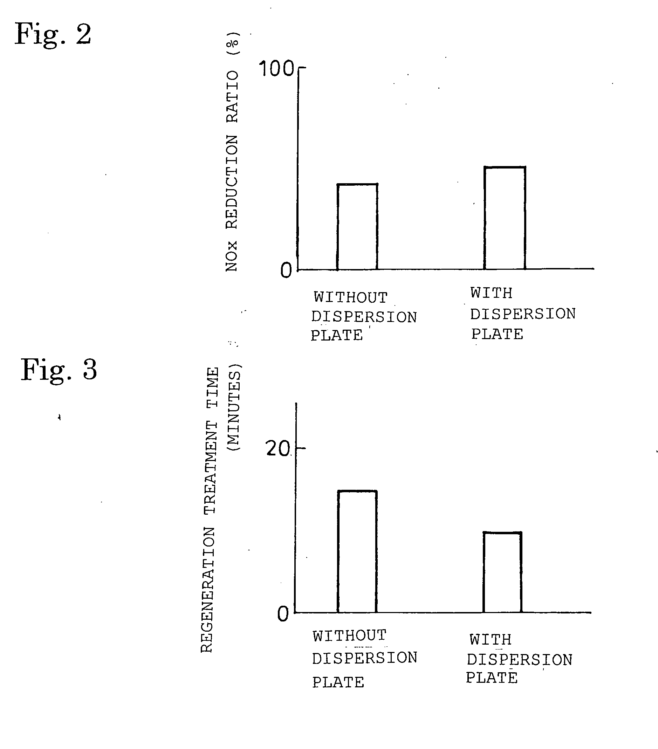

In fact, it has been ascertained by validation experiments conducted by the inventors that, as shown in the graph of Fig. 2, the NOₓ reduction ratio is enhanced in a case where a dispersion plate 15 is arranged in comparison with a case no dispersion plate 15 is arranged.

Especially in the embodiment, the particles entrained in the exhaust gas 9 having passed through the NOₓ-adsorption reduction catalyst 12 can be captured to realize concurrent reduction in amount of NOₓ and the particulates and, moreover, the particulates captured can be efficiently burned off using the heat from the uniformized reaction on the front-end reduction catalyst 12.

Fig. 3 shows experimental results in validation on regenerative treatment time to the particulate filters 16 (treatment time necessary for forced burning-off of the captured particulates through positive addition of fuel); it has been ascertained that the regenerative treatment time can be substantially reduced in a case where the dispersion plate 15 is provided than in a case where no dispersion plate 15 is provided.

When the catalytic regenerative particulate filter 16 is provided in back-end, any excessive combustibles in use to regeneration of the front-end NOₓ-adsorption reduction catalyst 12 can be oxidized to substantially reduce HC remaining finally in the exhaust gas 9 and discharged outside of a vehicle.

It is to be understood that an exhaust emission control device according to the invention is not limited to the above embodiment and that various changes and modifications may be made without leaving the spirit of the invention. For example, the dispersion plate may be composed of any material other than punching metal and metal mesh.

## Claims

1. An exhaust emission control device wherein a NOₓ-adsorption reduction catalyst (12) is incorporated in an exhaust flow passage (11) for guiding exhaust gas (9) from an engine (1), fuel addition means (13) for addition of fuel as reducing agent being provided in the exhaust flow passage (11) upstream of the reduction catalyst (12), a dispersion plate (15) being provided between a position of adding fuel by the fuel addition means (13) and the reduction catalyst (12) so as to disperse the exhaust gas (9) to stimulate dispersion of the added fuel.

2. An exhaust emission control device according to claim 1, wherein the dispersion (15) plate is composed of at least either of punching metal and metal mesh.

3. An exhaust emission control device according to claim 1, wherein a catalytic regenerative particulate filter (16) is arranged just behind the NOₓ-adsorption reduction catalyst (12).

4. An exhaust emission control device according to claim 2, a catalytic regenerative particulate filter (16) is arranged just behind the NOₓ-adsorption reduction catalyst (12).
